# EUROPÄISCHE PATENTSCHRIFT

(11) **EP 2 195 561 B1**
(45) Veröffentlichungstag und Bekanntmachung des Hinweises auf die Patenterteilung: **30.11.2011**
(21) Anmeldenummer: 08803054.9
(22) Anmeldetag: 15.08.2008
(51) Int. Cl.: F16H 61/42, F16H 61/46

(54) **VERSTELLVORRICHTUNG DES HUBVOLUMENS VON HYDRAULISCHEN KOLBENMASCHINEN**
DEVICE FOR ADJUSTING THE STROKE VOLUME OF HYDRAULIC PISTON MACHINES
DISPOSITIF DE RÉGLAGE DE LA CYLINDRÉE DE MOTEURS À PISTONS HYDRAULIQUES

(30) Priorität: 02.10.2007 DE 102007047195
(43) Veröffentlichungstag der Anmeldung: 16.06.2010
(73) Patentinhaber: ZF Friedrichshafen AG, 88038 Friedrichshafen (DE)
(72) Erfinder: LEGNER, Jürgen, 88048 Friedrichshafen (DE)
(86) Internationale Anmeldenummer: PCT/EP2008/060762
(87) Internationale Veröffentlichungsnummer: WO 2009/047040

(56) Entgegenhaltungen:
- WO-A-86/00963
- AT-B- 197 650
- FR-A- 1 197 751
- US-A- 3 601 981

## Beschreibung

Die Erfindung bezieht sich auf eine Verstellvorrichtung des Hubvolumens von hydraulischen Kolbenmaschinen nach der im Oberbegriff von Anspruch 1 näher definierten Art.

Hydraulische Kolbenmaschinen werden beispielsweise bei hydrostatisch-mechanischen Leistungsverzweigungsgetrieben für den hydraulischen Leistungszweig verwendet, um die Übersetzung des Getriebes stufenlos zu verändern. Hierzu benötigen die hydraulischen Kolbenmaschinen Verstellvorrichtungen, mittels welcher das Hubvolumen der Kolbenmaschinen verstellt werden kann.

Die DE 42 06 023 A1 offenbart ein stufenloses hydrostatischmechanisches Leistungsverzweigungsgetriebe mit hydraulischen Kolbenmaschinen und Verstellvorrichtungen, mittels welcher die Kolbenmaschinen stufenlos verstellt werden können. Die Verstellvorrichtung umfaßt Steuerorgane, mittels welcher die Kolbenmaschinen angesteuert werden können. Um das System vor Überlastung zu schützen, weist die Verstellvorrichtung ein Hochdruckbegrenzungsventil auf, mittels welchem der maximale Druck begrenzt werden kann. Bei Aktivierung des Hochdruckbegrenzungsventils wird die Energie in Wärme umgewandelt, welche über einen Kühler abgegeben werden muß.

Die US 3 601 981 A offenbart eine Verstellvorrichtung nach dem Oberbegriff des Hauptanspruchs.

Der vorliegenden Erfindung liegt die Aufgabe zugrunde, eine Verstellvorrichtung des Hubvolumens von hydraulischen Kolbenmaschinen zu schaffen, welche einfach aufgebaut ist und das System vor Überhitzung schützt.

Die Aufgabe wird mit einer, auch die kennzeichnenden Merkmale des Hauptanspruchs aufweisenden, gattungsgemäßen Verstellvorrichtung gelöst.

Die Verstellvorrichtung weist eine erste und eine zweite Kolbenmaschine auf, wobei die Kolbenmaschinen in Schrägachsen-Bauart ausgeführt sind. Kolbenmaschinen in Schrägachsen-Bauart zeichnen sich durch sehr gute Wirkungsgrade aus. Die beiden Kolbenmaschinen sind benachbart zueinander angeordnet und weisen ein gemeinsames Bauteil, ein sogenanntes Joch, auf, mittels welchem die beiden Kolbenmaschinen in ihrem Hubvolumen gemeinsam verstellt werden können. Die Kolbenmaschinen weisen Arbeitsleitungen auf, über welche die beiden Kolbenmaschinen miteinander verbunden sind. Dadurch bilden die Kolbenmaschinen einen sogenannten geschlossenen Kreislauf. Das gemeinsame Bauteil zum Verstellen des Hubvolumens der Kolbenmaschinen ist so angeordnet, dass in einer ersten Stellung des gemeinsamen Bauteils die erste hydraulische Kolbenmaschine auf ein kleines oder kein Hubvolumen und die zweite hydraulische Kolbenmaschine auf ein großes oder maximales Hubvolumen verstellt ist. Die erste hydraulische Kolbenmaschine arbeitet beispielsweise als Pumpe und fördert Druckmittel zur zweiten Kolbenmaschine, welche in diesem Betriebszustand als Motor arbeitet. Im anderen Betriebszustand arbeitet die zweite Kolbenmaschine als Pumpe und die erste Kolbenmaschine als Motor. Verstellt man das gemeinsame Bauteil aus seiner ersten Stellung in Richtung zweite Stellung, so vergrößert sich das Hubvolumen der ersten Kolbenmaschine, beispielsweise der Pumpe, und das Hubvolumen der zweiten Kolbenmaschine, beispielsweise des Motors, wird gleichzeitig verkleinert. Beim Betrieb in der zweiten Stellung des gemeinsamen Bauteils weist die erste Kolbenmaschine ihr maximales Hubvolumen auf und fördert beim Betrieb als Pumpe somit einen maximalen Volumenstrom, und die zweite Kolbenmaschine weist ihr minimales Hubvolumen auf und erzeugt somit beim Betrieb als Motor eine hohe Abtriebsdrehzahl. Das gemeinsame Bauteil läßt sich durch Mittel zum Verstellen, wie beispielsweise einem hydraulischen Zylinder, von einer ersten Stellung in Richtung zweite Stellung oder von einer zweiten Stellung in Richtung erste Stellung verstellen. Dadurch kann beispielsweise ein Fahrer eines Fahrzeugs über eine Einrichtung zur manuellen Vorgabe, beispielsweise über ein Fahrpedal, welches mechanisch oder elektrisch ein Ventil ansteuert, den Fahrerwunsch an die Mittel zum Verstellen des gemeinsamen Bauteils weitergeben, wodurch das gemeinsame Bauteil in Abhängigkeit des Fahrerwunsches, und somit der Betätigung der Einrichtung zur manuellen Vorgabe, verstellt wird. Möchte der Fahrer eine höhere Abtriebsdrehzahl in der zweiten Kolbenmaschine, so wird das gemeinsame Bauteil in Richtung zweiter Stellung verstellt. Möchte der Fahrer eine geringere Abtriebsdrehzahl, so wird das gemeinsame Bauteil in Richtung erster Stellung verstellt. Steigt der Fahrwiderstand, so besteht die Möglichkeit, dass ein zulässiger Druck in den Arbeitsleitungen zwischen der ersten und zweiten Kolbenmaschine überschritten wird.

Erfindungsgemäß wird das gemeinsame Bauteil bei Überschreiten eines zuvor definierten Druckniveaus in Richtung erster Stellung verstellt, wodurch die erste Kolbenmaschine, beispielsweise die Pumpe, in Richtung kleineres Hubvolumen verstellt wird, und die zweite Kolbenmaschine, beispielsweise der Motor, in Richtung größeres Hubvolumen verstellt wird, wodurch der Druck in den Arbeitsleitungen sinkt. Dieses zuvor definierte Druckniveau liegt unterhalb eines maximal zulässigen Druckniveaus, bei welchem Hochdruckbegrenzungsventile öffnen, wodurch eine Überhitzung des Systems verhindert wird, da die Energie nicht über die Hochdruckbegrenzungsventile in Wärme umgewandelt wird.

In einer weiteren Ausgestaltungsform der Erfindung besteht die Möglichkeit, über eine weitere Einrichtung zur manuellen Vorgabe eine weitere Vorgabe dem aktuellen Druckniveau in den Arbeitsleitungen zu überlagern, wodurch das gemeinsame Bauteil schon bei einem geringeren Druckniveau in Richtung erster Stellung verstellt wird. Dadurch ist es möglich, den maximal zulässigen Druck stufenlos zu beeinflussen. Bei Verwendung eines einfach wirkenden hydraulischen Zylinders, welcher über eine Feder in seiner Ausgangsposition verstellt wird und in dieser Ausgangsposition mit dem gemeinsamen Bauteil in seiner ersten Stellung verbunden ist, besteht die Möglichkeit, durch Druckbeaufschlagung dieses hydraulischen Zylinders mit Druck einer Druckmittelquelle das gemeinsame Bauteil von der ersten Stellung in Richtung zweite Stellung zu bewegen. Beim Verbinden des hydraulischen Zylinders mit einem Druckmittelreservoir bewegt sich das gemeinsame Bauteil in Richtung erster Stellung zurück. Die Einrichtung zur manuellen Vorgabe kann aus einem weiteren Ventil bestehen, welches den Druckmittelzylinder mit der Druckmittelquelle oder mit dem Druckmittelreservoir, je nach Fahrerwunsch, verbindet, und so die Stellung des gemeinsamen Bauteils bestimmt, wodurch die Abtriebsdrehzahl der Kolbenmaschine festgelegt wird. Zwischen diesem weiteren Ventil und dem hydraulischen Zylinder ist ein Ventil angeordnet, welches in seiner Grundstellung das Druckmittel, kommend von dem weiteren Ventil, mit dem hydraulischen Zylinder verbindet und in seiner weiteren Stellung das Druckmittel, kommend vom weiteren Ventil, absperrt und den hydraulischen Zylinder mit dem Druckmittelreservoir verbindet. Die weitere Stellung wird angesteuert, wenn in den Arbeitsleitungen ein Druckniveau oberhalb eines definierten Druckniveaus auftritt.

Somit ist es möglich, über das weitere Ventil das gemeinsame Bauteil im Sinne einer Drehzahlsteuerung anzusteuern und über das Ventil, welches zwischen dem hydraulischen Zylinder und dem weiteren Ventil angeordnet ist, eine Begrenzung des Druckniveaus durch Verstellung des gemeinsamen Bauteils in Richtung erste Stellung herbeizuführen.

Weitere Merkmale sind der Figuren-Beschreibung zu entnehmen.
Es zeigen:
- Fig. 1: ein Hydraulikschema der Verstellvorrichtung und

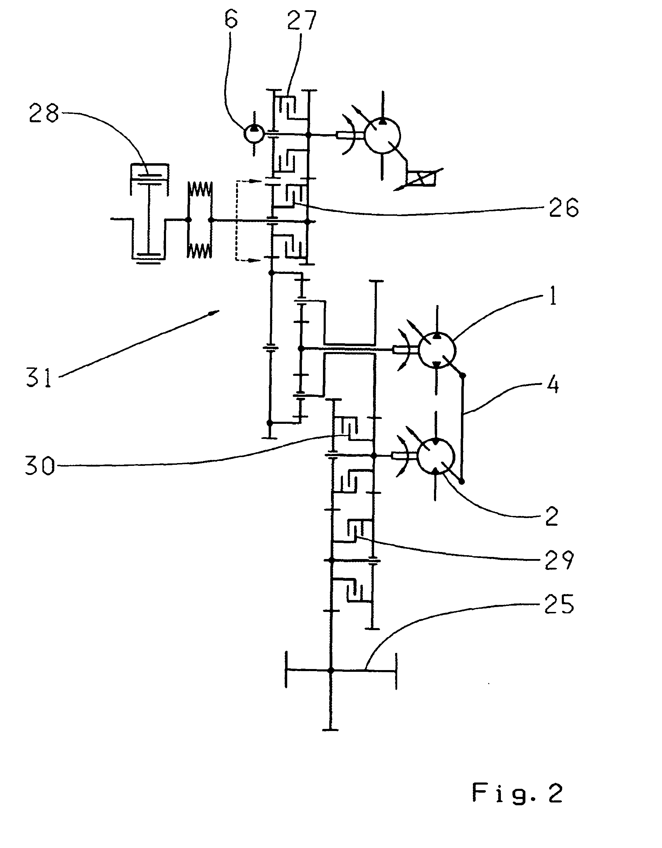

- Fig. 2: ein Getriebeschema eines hydrostatisch-mechanischen Leistungsverzweigungsgetriebes.

### Fig. 1:

Die Verstellvorrichtung weist eine erste Kolbenmaschine 1 in Schrägachsen-Bauart, welche in einem Betriebszustand, beispielsweise als Pumpe, arbeitet, und eine zweite Kolbenmaschine 2 in Schrägachsen-Bauart auf, welche in einem Betriebszustand, beispielsweise als Motor, arbeitet. Die erste Kolbenmaschine 1 und die zweite Kolbenmaschine 2 sind über Arbeitsleitungen 3 miteinander verbunden. Das Hubvolumen der ersten Kolbenmaschine 1 und der zweiten Kolbenmaschine 2 wird über ein gemeinsames Bauteil 4 verstellt. Ein federbelasteter hydraulischer Zylinder 5 ist mit dem gemeinsamen Bauteil 4 verbunden. Im drucklosen Zustand des hydraulischen Zylinders 5 ist die erste Kolbenmaschine auf kein Hubvolumen verstellt, d. h., wird die erste Kolbenmaschine 1 angetrieben, so fördert sie kein Druckmittel. Die zweite Kolbenmaschine 2 ist im drucklosen Zustand des hydraulischen Zylinders 5 auf maximales Hubvolumen verstellt. Eine Druckmittelquelle 6 fördert Druckmittel aus einem Druckmittelreservoir 7 in die Leitung 8. Soll das gemeinsame Bauteil 4 aus seiner ersten Stellung bei drucklosem hydraulischen Zylinder 5 in Richtung zweite Stellung verstellt werden, so wird das Ventil 9 der Einrichtung zur manuellen Vorgabe 10 so umgesteuert, dass Druckmittel von der Leitung 8 in die Leitung 11 fließt. Befindet sich das Ventil 12 in seiner Grundstellung, so gelangt das Druckmittel von der Leitung 11 über die Leitung 13 in den hydraulischen Zylinder 5 und verstellt das gemeinsame Bauteil 4 in Richtung zweite Stellung, wodurch das Hubvolumen der ersten Kolbenmaschine 1 sich vergrö-βert, das Hubvolumen der zweiten Kolbenmaschine 1 sich verringert und Druckmittel über die Arbeitsleitungen 3 von der ersten Kolbenmaschine 1 zur zweiten Kolbenmaschine 2 gefördert wird. Das Ventil 12 wird über die Feder 14 in seiner Grundstellung gehalten, wobei der höhere Druck in den Arbeitsleitungen 3 über das Wechselventil 15 über die Leitung 16 zur Kreisringfläche 17 gelangt. Die Kreisringfläche 17 ist mit der Feder 14 so ausgelegt, dass unterhalb dem Öffnungsniveau der Druckbegrenzungsventile 18 das Ventil 12 in seine zweite Position umgesteuert wird, wodurch das Druckmittel der Leitung 11 nicht mehr in den hydraulischen Zylinder 5 gelangt und der hydraulische Zylinder 5 mit dem Druckmittelreservoir 7 verbunden wird, wodurch das gemeinsame Bauteil 4 in Richtung erste Stellung verstellt wird, wodurch der Druck in den Arbeitsleitungen 3 wieder sinkt. Indem das Ventil 12 unterhalb des Druckniveaus der Druckbegrenzungsventile 18 umgesteuert wird, bleiben die Druckbegrenzungsventile 18 geschlossen, wodurch der Antrieb vor Überhitzung geschützt bleibt. Fällt der Druck in den Arbeitsleitungen 3 wieder, so wird das Ventil 12 wieder in seine Ausgangsposition zurückgesteuert, und das Druckmittel der Leitung 11 erreicht wieder den hydraulischen Zylinder 5. Das Ventil 12 weist eine Kreisfläche 19 auf, welche mit der Leitung 20 in Verbindung steht. Über das Ventil 21 der weiteren Einrichtung zur manuellen Vorgabe 22 gelangt beim Aktivieren des Ventils 21 Druckmittel aus der Leitung 8 über die Leitung 20 auf die Kreisfläche 19. Dieser Druck, welcher auf die Kreisfläche 19 wirkt, erzeugt eine Kraft auf die Feder 14 des Ventils 12, welcher zur Kraft, resultierend aus dem Druck der Leitung 16, welcher auf die Kreisringfläche 17 wirkt, summiert wird. Dadurch kann der Druck der Leitung 8 dem Druck der Leitung 16 überlagert werden, wodurch der Umschaltpunkt des Ventils 12 stufenlos, und somit in Abhängigkeit der weiteren Einrichtung zur manuellen Vorgabe 22, eingestellt werden kann. Vorzugsweise ist das Flächenverhältnis zwischen der Kreisfläche 19 und der Kreisringfläche 17 3 : 100, wodurch sich bei einem maximalen Steuerdruck von beispielsweise 16 bar eine Kraft auf das Ventil 12 erzeugen läßt, welche einem Druck von 533 bar auf der Kreisringfläche 17 entsprechen wird. Durch diese stufenlose Begrenzung des Hochdrucks kann bei Verwendung der Verstelleinrichtung in einem Mobil-Fahrzeug eine stufenlose Zugkrafteinstellung geschaffen werden. Durch die Einrichtung zur manuellen Vorgabe 10 kann eine stufenlose Geschwindigkeitseinstellung geschaffen werden. Kombiniert man die stufenlose Geschwindigkeitseinstellung mit der stufenlosen Zugkrafteinstellung, so läßt sich eine stufenlose Leistungsregelung des Fahrzeugs verwirklichen. Die Druckmittelquelle 6 versorgt neben der Verstelleinrichtung bei Verwendung der Verstelleinrichtung in einem Getriebe Betätigungseinrichtungen 23 und Kupplungen 24.

### Fig. 2:

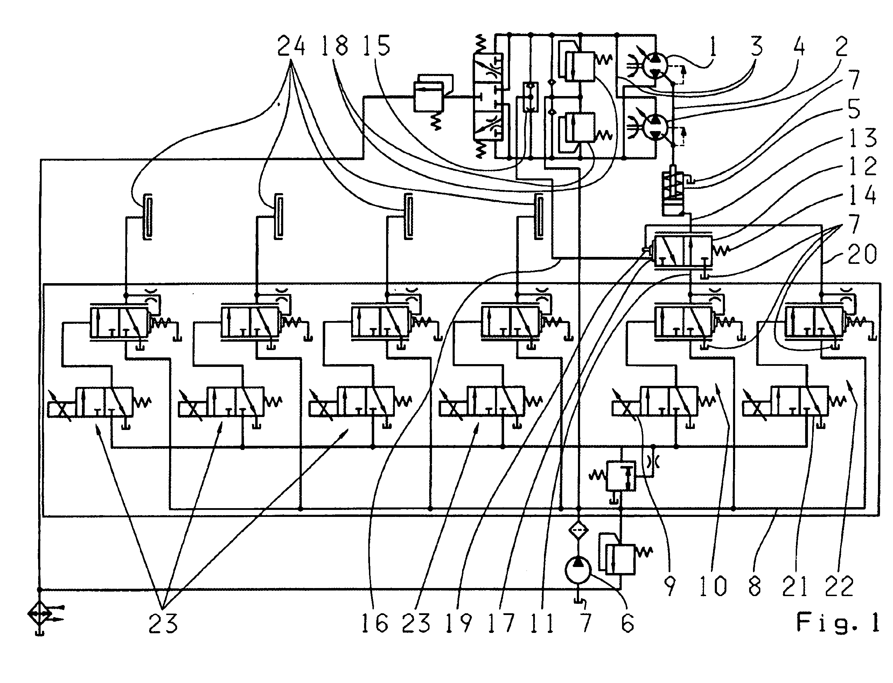

Das hydrostatisch-mechanische Leistungsverzweigungsgetriebe weist eine erste Kolbenmaschine 1 und eine zweite Kolbenmaschine 2 der in Fig. 1 beschriebenen Art auf, welche über ein gemeinsames Bauteil 4 im Hubvolumen verstellbar sind. Der Abtrieb 25 ist über eine Kupplung für Vorwärtsfahrt 26 oder eine Kupplung für Rückwärtsfahrt 27 mit dem Antrieb 28 verbindbar. Die Fahrbereiche lassen sich über eine Kupplung 29 und eine Kupplung 30 schalten. Das Summierungsgetriebe 31 summiert den mechanischen und hydraulischen Leistungszweig.

### Bezugszeichen

- 1: erste Kolbenmaschine
- 2: zweite Kolbenmaschine
- 3: Arbeitsleitung
- 4: gemeinsames Bauteil
- 5: hydraulischer Zylinder
- 6: Druckmittelquelle
- 7: Druckmittelreservoir
- 8: Leitung
- 9: Ventil
- 10: Einrichtung zur manuellen Vorgabe
- 11: Leitung
- 12: Ventil
- 13: Leitung
- 14: Feder
- 15: Wechselventil
- 16: Leitung
- 17: Kreisringfläche
- 18: Druckbegrenzungsventil
- 19: Kreisfläche
- 20: Leitung
- 21: Ventil
- 22: weitere Einrichtung zur manuellen Vorgabe
- 23: Betätigungseinrichtung
- 24: Kupplung
- 25: Abtrieb
- 26: Kupplung für Vorwärtsfahrt
- 27: Kupplung für Rückwärtsfahrt
- 28: Antrieb
- 29: Kupplung
- 30: Kupplung
- 31: Summierungsgetriebe

## Patentansprüche

1. Verstellvorrichtung des Hubvolumens von hydraulischen Kolbenmaschinen in Schrägachsen-Bauart, wobei eine erste Kolbenmaschine (1) benachbart zu einer zweiten Kolbenmaschine (2) angeordnet ist, wobei die beiden Kolbenmaschinen Arbeitsleitungen (3) aufweisen, über welche die beiden Kolbenmaschinen miteinander hydraulisch verbunden sind, und die Kolbenmaschinen verstellbare Achsen aufweisen, welche über ein gemeinsames Bauteil (4) so verbunden sind, dass durch Bewegen des gemeinsamen Bauteils (4) die verstellbaren Achsen gemeinsam verstellt werden, wobei in einer ersten Stellung des gemeinsamen Bauteils (4) die erste hydraulische Kolbenmaschine (1) auf ein kleines oder kein Hubvolumen und die zweite hydraulische Kolbenmaschine (2) auf ein großes oder maximales Hubvolumen verstellt ist, und in einer zweiten Stellung des gemeinsamen Bauteils (4) die erste hydraulische Kolbenmaschine (1) auf ein großes oder maximales Hubvolumen und die zweite hydraulische Kolbenmaschine (2) auf ein kleines oder minimales Hubvolumen verstellt ist, mit Mittel zum Verstellen (5) des gemeinsamen Bauteils (4), wobei das gemeinsame Bauteil (4) in Abhängigkeit einer Einrichtung zur manuellen Vorgabe (10), je nach Vorgabe, in Richtung erster Stellung oder zweiter Stellung verstellbar ist, und das gemeinsame Bauteil (4), unabhängig von der manuellen Vorgabe (10), in Richtung erster Stellung verstellbar ist, wenn ein zuvor definierter Druck in einer der Arbeitsleitungen (3) überschritten wird, **dadurch gekennzeichnet, dass** eine weitere Einrichtung zur manuellen Vorgabe (22) vorhanden ist, mittels welcher das gemeinsame Bauteil (4) bei Betätigung der weiteren Einrichtung (22) in Abhängkeit des Drucks in den Ar beitsleitungen (3) und in Abhängigkeit der Betätigung der weiteren manuellen Vorgabe (22) in Richtung erster Stellung verstellbar ist, so dass bei unveränderter Betätigung der Einrichtung zur manuellen Vorgabe (10) und bei betätigter weiteren Einrichtung zur manuellen Vorgabe (22) das gemeinsame Bauteil (4) bei einem geringeren Druck in den Arbeitsleitungen (3) in Richtung erster Stellung verstellt wird, als bei unbetätigter weiteren Einrichtung zur manuellen Vor gabe (22).

2. Verstellvorrichtung nach Anspruch 1, **dadurch gekennzeichnet, dass** das Mittel zur Verstellung des gemeinsamen Bauteils (5) als einfach wirkender Hydraulikzylinder ausgebildet ist, welcher in seiner Grundstellung das gemeinsame Bauteil (4) in der ersten Stellung hält und bei Druckbeaufschlagung das gemeinsame Bauteil (4) in Richtung zweite Stellung verstellt.

3. Verstellvorrichtung nach Anspruch 2, **dadurch gekennzeichnet, dass** ein Ventil (12) dem Hydraulikzylinder (5) vorgeschaltet angeordnet ist, wobei in einer Grundstellung des Ventils (12) der Hydraulikzylinder (5) über das Ventil (12) in Abhängigkeit der Einrichtung zur manuellen Vorgabe (10) mit einer Druckmittelquelle (6) oder mit einem Druckmittelreservoir (7) verbindbar ist, und das Ventil (12) in seiner weiteren Stellung den Hydraulikzylinder (5) mit einem Druckmittelreservoir (7) verbindet, wodurch das gemeinsame Bauteil (4), unabhängig von der manuellen Vorgabe (10), in Richtung erster Stellung verstellt wird.

4. Verstellvorrichtung nach Anspruch 3, **dadurch gekennzeichnet, dass** zum Verstellen des Ventils (12) aus der Grundstellung in eine weitere Stellung der Druck einer der Arbeitsleitungen (3) auf das Ventil wirkt.

5. Verstellvorrichtung nach Anspruch 4, **dadurch gekennzeichnet, dass** dem Druck der Arbeitsleitungen (3), welcher auf das Ventil (12) wirkt, ein weiterer Druck überlagert wird, welcher von der weiteren Einrichtung zur manuellen Vorgabe (22) einstellbar ist, wodurch beim Überlagern des weiteren Druckes das Ventil (12) bei einem geringeren Druck in den Arbeitsleitungen (3) bereits in die weitere Stellung umgesteuert wird.

6. Verstellvorrichtung nach Anspruch 5, **dadurch gekennzeichnet, dass** das Ventil (12) gegen eine Feder (14) verstellbar ist und eine erste mit Druck beaufschlagbare Fläche (19) und eine zweite mit Druck beaufschlagbare Fläche (17) aufweist, wobei das Ventil (12) von seiner Grundstellung in die weitere Stellung gegen die Kraft der Feder (14) verstellbar ist, wenn Druck auf eine oder beide Flächen (17, 19) wirkt, wobei die erste Fläche (19) über die weitere Einrichtung zur manuellen Vorgabe (22) mit Druckmittel einer Druckmittelquelle (6) verbindbar ist, und die zweite Fläche (17) mit Druckmittel der Arbeitsleitung (3), welche den höheren Druck aufweist, verbindbar ist.

7. Verstellvorrichtung nach Anspruch 6, **dadurch gekennzeichnet, dass** die erste Fläche (19) größer ist als die zweite Fläche (17).

8. Verstellvorrichtung nach Anspruch 1, **dadurch gekennzeichnet, dass** die erste Kolbenmaschine (1) und die zweite Kolbenmaschine (2) in einem hydrostatisch-mechanischen Leistungsverzweigungsgetriebe mit einem hydraulischen und einem mechanischen Zweig angeordnet sind, wobei der hydraulische Zweig mit der ersten Kolbenmaschine (1) und der zweiten Kolbenmaschine (2) in Verbindung steht.

## Claims

1. Adjusting device for the swept volume of hydraulic piston machines of bent-axis design, a first piston machine (1) being arranged adjacently to a second piston machine (2), the two piston machines having working lines (3), via which the two piston machines are connected hydraulically to one another, and the piston machines having adjustable axles which are connected via a common component (4) in such a way that the adjustable axles are adjusted jointly by movement of the common component (4), the first hydraulic piston machine (1) being adjusted to a small or no swept volume and the second hydraulic piston machine (2) being adjusted to a large or maximum swept volume in a first position of the common component (4), and the first hydraulic piston machine (1) being adjusted to a large or maximum swept volume and the second hydraulic piston machine (2) being adjusted to a small or minimum swept volume in a second position of the common component (4), having means for adjusting (5) the common component (4), it being possible for the common component (4) to be adjusted, as a function of a device for manual stipulation (10), in the direction of the first position or second position, depending on the stipulation, and it being possible for the common component (4) to be adjusted in the direction of the first position, independently of the manual stipulation (10), if a previously defined pressure is exceeded in one of the working lines (3), **characterized in that** there is a further device for manual stipulation (22), by means of which the common component (4) can be adjusted in the direction of the first position, upon actuation of the further device (22), as a function of the pressure in the working lines (3) and as a function of the actuation of the further manual stipulation (22), with the result that, in the case of an unchanged actuation of the device for manual stipulation (10) and in the case of an actuated further device for manual stipulation (22), the common component (4) is adjusted in the direction of the first position at a lower pressure in the working lines (3) than in the case of a non-actuated further device for manual stipulation (22).

2. Adjusting device according to Claim 1, **characterized in that** the means for adjusting the common component (5) is configured as a simply acting hydraulic cylinder which, in its basic position, holds the common component (4) in the first position and, if loaded with pressure, adjusts the common component (4) in the direction of the second position.

3. Adjusting device according to Claim 2, **characterized in that** a valve (12) is arranged such that it is connected in front of the hydraulic cylinder (5), it being possible, in a basic position of the valve (12), for the hydraulic cylinder (5) to be connected via the valve (12) to a pressure-medium source (6) or to a pressure-medium reservoir (7) as a function of the device for manual stipulation (10), and, in its further position, the valve (12) connecting the hydraulic cylinder (5) to a pressure-medium reservoir (7), as a result of which the common component (4) is adjusted in the direction of the first position, independently of the manual stipulation (10).

4. Adjusting device according to Claim 3, **characterized in that** the pressure of one of the working lines (3) acts on the valve in order to adjust the valve (12) from the basic position into a further position.

5. Adjusting device according to Claim 4, **characterized in that** a further pressure is superimposed on that pressure of the working lines (3) which acts on the valve (12), which further pressure can be set by the further device for manual stipulation (22), as a result of which, in the case of the superimposition of the further pressure, the valve (12) is already controlled into the further position in the case of a relatively low pressure in the working lines (3).

6. Adjusting device according to Claim 5, **characterized in that** the valve (12) can be adjusted counter to a spring (14) and has a first face (19) which can be loaded with pressure and a second face (17) which can be loaded with pressure, it being possible for the valve (12) to be adjusted from its basic position into the further position counter to the force of the spring (14) when pressure acts on one or both faces (17, 19), it being possible for the first face (19) to be connected via the further device for manual stipulation (22) to pressure medium of a pressure-medium source (6), and it being possible for the second face (17) to be connected to pressure medium of the working line (3) which has the higher pressure.

7. Adjusting device according to Claim 6, **characterized in that** the first face (19) is larger than the second face (17).

8. Adjusting device according to Claim 1, **characterized in that** the first piston machine (1) and the second piston machine (2) are arranged in a hydrostatic/mechanical power-split transmission having a hydraulic branch and a mechanical branch, the hydraulic branch being connected to the first piston machine (1) and the second piston machine (2).

## Revendications

1. Dispositif de réglage de la cylindrée de machines à pistons hydrauliques de construction à axes obliques, dans lequel une première machine à piston (1) est disposée à côté d'une deuxième machine à piston (2), les deux machines à pistons présentant des conduites de travail (3) par le biais desquelles les deux machines à pistons sont connectées hydrauliquement l'une à l'autre, et les machines à pistons présentant des axes réglables qui sont connectés par le biais d'un composant commun (4) de telle sorte que le déplacement du composant commun (4) règle en commun les axes réglables, et dans une première position du composant commun (4), la première machine à piston hydraulique (1) étant réglée à une petite cylindrée ou à une cylindrée nulle, et la deuxième machine à piston hydraulique (2) étant réglée à une grande cylindrée ou à une cylindrée maximale, et dans une deuxième position du composant commun (4), la première machine à piston hydraulique (1) étant réglée à une grande cylindrée ou à une cylindrée maximale, et la deuxième machine à piston hydraulique (2) étant réglée à une petite cylindrée ou à une cylindrée minimale, avec des moyens de réglage (5) du composant commun (4), le composant commun (4), en fonction d'un dispositif de présélection manuelle (10), selon la présélection, pouvant être réglé dans la direction de la première position ou de la deuxième position, et le composant commun (4), indépendamment de la présélection manuelle (10), pouvant être réglé dans la direction de la première position lorsqu'une pression définie préalablement est dépassée dans l'une des conduites de travail (3), **caractérisé en ce qu'**un autre dispositif de présélection manuelle (22) est prévu, au moyen duquel le composant commun (4), lors de l'actionnement du dispositif supplémentaire (22), peut être réglé dans la direction de la première position en fonction de la pression dans les conduites de travail (3) et en fonction de l'actionnement de l'autre présélection manuelle (22), de sorte que dans le cas d'un actionnement non modifié du dispositif pour la présélection manuelle (10) et dans le cas de l'actionnement du dispositif supplémentaire pour la présélection manuelle (22), le composant commun (4) soit réglé dans la direction de la première position en cas de plus faible pression dans les conduites de travail (3) que dans le cas où le dispositif supplémentaire pour la présélection manuelle (22) n'est pas activé.

2. Dispositif de réglage selon la revendication 1, **caractérisé en ce que** le moyen de réglage du composant commun (5) est réalisé sous forme de cylindre hydraulique à effet simple, qui retient dans sa position de base le composant commun (4) dans la première position et qui, dans le cas d'une sollicitation par pression, déplace le composant commun (4) dans la direction de la deuxième position.

3. Dispositif de réglage selon la revendication 2, **caractérisé en ce qu'**une soupape (12) est disposée en amont du cylindre hydraulique (5), le cylindre hydraulique (5), dans une position de base de la soupape (12), pouvant être connecté par le biais de la soupape (12) en fonction du dispositif de présélection manuelle (10) à une source de fluide sous pression (6) ou à un réservoir de fluide sous pression (7), et la soupape (12), dans son autre position, reliant le cylindre hydraulique (5) à un réservoir de fluide sous pression (7), de sorte que le composant commun (4), indépendamment de la présélection manuelle (10), soit déplacé dans la direction de la première position.

4. Dispositif de réglage selon la revendication 3, **caractérisé en ce que** pour le réglage de la soupape (12) de la position de base dans une autre position, la pression de l'une des conduites de travail (3) agit sur la soupape.

5. Dispositif de réglage selon la revendication 4, **caractérisé en ce que** l'on ajoute à la pression des conduites de travail (3), qui agit sur la soupape (12), une pression supplémentaire qui peut être ajustée par le dispositif supplémentaire pour la présélection manuelle (22), de sorte que dans le cas d'une superposition de la pression supplémentaire, la soupape (12) est déjà inversée dans l'autre position en cas de plus faible pression dans les conduites de travail (3).

6. Dispositif de réglage selon la revendication 5, **caractérisé en ce que** la soupape (12) peut être réglée contre un ressort (14) et présente une première surface (19) pouvant être sollicitée en pression et une deuxième surface (17) pouvant être sollicitée en pression, la soupape (12) pouvant être déplacée de sa position de base dans l'autre position à l'encontre de la force du ressort (14), lorsqu'une pression agit sur une ou les deux surfaces (17, 19), la première surface (19) pouvant être connectée à du fluide sous pression d'une source de fluide sous pression (6) par le biais du dispositif supplémentaire de présélection manuelle (22), et la deuxième surface (17) pouvant être connectée à du fluide sous pression de la conduite de travail (3) qui présente la plus haute pression.

7. Dispositif de réglage selon la revendication 6, **caractérisé en ce que** la première surface (19) est supérieure à la deuxième surface (17).

8. Dispositif de réglage selon la revendication 1, **caractérisé en ce que** la première machine à piston (1) et la deuxième machine à piston (2) sont disposées dans une transmission à répartition de puissance mécanique-hydrostatique avec une branche hydraulique et une branche mécanique, la branche hydraulique étant en liaison avec la première machine à piston (1) et la deuxième machine à piston (2).
